(19) **Europäisches Patentamt**

**European Patent Office**

**Office européen des brevets**

(11) **EP 0 666 148 B1**

(12) **EUROPÄISCHE PATENTSCHRIFT**

(45) Veröffentlichungstag und Bekanntmachung des Hinweises auf die Patenterteilung:
**18.06.1997 Patentblatt 1997/25**

(51) Int. Cl.$^6$: **B25F 5/00**

(21) Anmeldenummer: **94810703.2**

(22) Anmeldetag: **07.12.1994**

(54) **Verfahren und Einrichtung für handgeführte Werkzeugmaschinen zur Vermeidung von Unfällen durch Werkzeugblockieren**

Method and apparatus for handheld machine tools to prevent accidents caused by blocking of the tool

Procédé et dispositif pour machines portatives pour éviter des accidents causés par un blocage d'outil

(84) Benannte Vertragsstaaten:
**AT CH DE FR GB LI NL SE**

(30) Priorität: **28.12.1993 DE 4344817**

(43) Veröffentlichungstag der Anmeldung:
**09.08.1995 Patentblatt 1995/32**

(73) Patentinhaber: **HILTI Aktiengesellschaft**
**9494 Schaan (LI)**

(72) Erfinder: **Lino, Guzzella**
**CH-8304 Wallisellen (CH)**

(74) Vertreter: **Wildi, Roland**
**Hilti Aktiengesellschaft**
**Patentabteilung**
**9494 Schaan (LI)**

(56) Entgegenhaltungen:
**EP-A- 0 150 669**      **EP-A- 0 345 655**
**WO-A-88/06508**

Anmerkung:   Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

# Beschreibung

Die Erfindung betrifft ein Verfahren sowie eine Einrichtung zur Vermeidung von Unfällen aufgrund von Werkzeugblockierern beim Arbeiten mit handgeführten Werkzeugmaschinen mit rotierendem Werkzeug, insbesondere Bohrhämmern, die mit einer Unterbrechereinrichtung zum Unterbrechen der Wirkung des Antriebsmotors auf das Werkzeug in Abhängigkeit von einem durch einen Verdrehsensor erfaßten Betriebszustand ausgerüstet sind.

Bei handgeführten Werkzeugmaschinen, insbesondere solchen größerer Leistung wie Bohrhämmern, sind sogenannte Rotationsunfälle, d.h. Verletzungen des Handgelenks oder der Sturz von Leitern, Gerüsten usw., bedingt durch das plötzliche Blockieren des Werkzeugs und das damit verbundene schnelle Ansteigen des Reaktionsmoments an der Maschine ein ernstes Problem. Aus der Vielzahl der bekannten Lösungsansätze für dieses Problem sei beispielhaft auf die Druckschriften EP-A-0 150 669 sowie WO-A-88/06508 hingewiesen.

Aus der erstgenannten Druckschrift ist es bekannt, innerhalb des Gehäuses der Werkzeugmaschine einen kleinen verschlossenen Behälter anzuordnen, der eine elektrische leitfähige flüssige Masse, insbesondere Quecksilber enthält, die vom Feld eines Permanentmagneten durchsetzt wird. Bei einer mehr oder weniger ruckartigen Verdrehung des Gehäuses aufgrund des erwähnten Reaktionsmoments um die Achse der Bohrspindel entsteht zwischen der trägen leitfähigen Masse und dem Behälter bzw. dem feststehenden Permanentmagneten eine Relativbewegung, die in der Masse eine elektrische Spannung induziert, die abgegriffen und beispielsweise in Abhängigkeit vom Überschreiten eines bestimmten Schwellenwerts zur Auslösung einer Kupplung herangezogen wird, die den Antriebsstrang vom Antriebsmotor der Werkzeugmaschine zur Bohrspindel unterbricht.

In der zweitgenannten Druckschrift, die den nächstkommenden Stand der Technik bildet, wird im Prinzip ähnliches vorgeschlagen, nämlich die Verwendung eines innerhalb des oder am Gehäuse angeordneten Verdrehsensors, der als Bewegungsgröße den Verdrehweg und/oder die Geschwindigkeit und/oder die Beschleunigung einer äußeren Schwenkbewegung der handgeführten Werkzeugmaschine erfaßt und gegebenenfalls in Abhängigkeit von verschiedenen Vorgabe-Kriterien eine Schaltkupplung beaufschlagt, die wiederum den Antriebsstrang zwischen Antriebsmotor und Bohrspindel unterbricht. Als Verdrehsensor konkret beschrieben ist ein federvorbelasteter, mechanischer Trägheitsschalter, der die Schaltkupplung unmittelbar betätigt. Als Alternativen erwähnt sind elektrische oder elektromechanische Sensoren, die bei Erreichen einer bestimmten Wegposition die Kupplung insbesondere über eine Schaltlogik elektrisch oder elektromechanisch auslöst.

Schwierigkeiten bei den beiden bekannten, vom Grundgedanken her ähnlichen Lösungen ergeben sich daraus, daß es auch bei einer gewünschten Handhabung der Maschine, etwa beim Arbeiten mit einem Bohrhammer in einer Betonmasse inhomogener Zusammensetzung, zu Fehlauslösungen der Sicherheitskupplung kommt. Dies hängt mit dem für alle bisher bekannten Lösungen grundsätzlich verwendeten Ansatz einer passiven Signalauswertung zusammen, insbesondere dann, wenn der Bewegungssensor und der Aktor in einer Einheit zusammengefaßt sind und rein mechanische oder elektromechanische Prinzipien angewendet werden.

Der Erfindung liegt damit die Aufgabe zugrunde, handgeführte Werkzeugmaschinen der eingangs genannten Art so zu verbessern, daß einerseits ein besseres Unterscheidungskriterium zwischen zulässigen und gefährlichen Reaktionsmomenten, die zu Rotationsunfällen führen können, gegeben ist und andererseits eine frühzeitigere Auslösung einer Sicherheits- oder Unterbrechereinrichtung ermöglicht wird, um die Arbeitssicherheit mit einer solchen Handwerkzeugmaschine insgesamt zu erhöhen.

Die Erfindung ist bei einem Verfahren zur Vermeidung von Unfällen durch Werkzeugblockieren beim Arbeiten mit handgeführten Werkzeugmaschinen mit rotierendem Werkzeug, insbesondere Bohrhämmern, die mit einer Unterbrechereinrichtung zum Unterbrechen der Wirkung des Antriebsmotors auf das Werkzeug in Abhängigkeit von einem durch einen Verdrehsensor erfaßten Betriebszustand ausgerüstet sind, erfindungsgemäß dadurch gekennzeichnet, daß unter Vorgabe einer Zeitkonstante aus der vom Verdrehsensor gelieferten Drehbewegungsgröße ein maximal zulässiger Verdrehwinkel der Werkzeugmaschine vorausschauend berechnet und die Unterbrechereinrichtung aktiviert wird, sobald der berechnete, zu erwartende Verdrehwinkel den Wert des maximal zulässigen Verdrehwinkels überschreitet.

Die Erfindung basiert damit auf der Idee einer **vorausschauenden** Entscheidung, über das zukünftige Verhalten der Maschine, so daß eine Gegenmaßnahme ausgelöst werden kann, bevor die Werkzeugmaschine einen zu großen Drehimpuls erhält, durch den sich ein Unfall nicht mehrvermeiden läßt.

In erster Linie ist bei dem Verdrehsensor an einen Drehbeschleunigungssensor, etwa einen mikromechanischen B-Messer mit sehr kurzer Ansprechzeit zu denken, dessen Meßwertsignal bei Überschreiten eines vorgebbaren Referenzwerts zur Umrechnung in den zu erwartenden Verdrehwinkel zweimalig über die Dauer der Zeitkonstante integriert wird.

Damit der Einfluß immer vorhandener tief- bzw. hochfrequenter Störungen reduziert wird, ist weiterhin erfindungsgemäß eine Begrenzung des Nutzbands in einem Wertebereich von 0,5 bis 10 Hz für die untere Grenzfreqenz und in einem Bereich von etwa 100 bis größenordnungsmäßig 1000 Hz für die obere Grenzfrequenz vorgesehen.

Als Unterbrechereinrichtung ist ähnlich wie bei den bekannten, oben beschriebenen Lösungen in erster Linie an eine elektromagnetische Kupplung, also an eine Reibkupplung, Lamellenkupplung oder auch eine Klauenkupplung zu denken, die die Wirkung der im Rotor des Motors gespeicherten kinetischen Energie auf die blockierte Werkzeugspindel schlagartig unterbricht. Durch vielfältige Meßreihen, Erfahrung und Versuche wurde ermittelt, daß für die erwähnte Unterbrechung - abhängig unter anderem vom jeweiligen Gerätetyp - eine Entkopplungszeit von 5 bis 20 ms zur Verfügung steht. Diese Entkopplung kann und wird in der Regel mit einer gleichzeitigen Stromunterbrechung für den Motor verbunden werden. Für kleinere Maschinen mit vergleichsweise leichten Rotoren kann an Stelle der Kupplung auch an eine rasch wirkende Bremseinrichtung gedacht werden, gegebenenfalls wiederum verbunden mit einer sofortigen Stromunterbrechung, wenn der aus dem Verdrehsensorsignal vorausberechnete Verdrehwinkel einen vorgegebenen, maximal zulässigen Verdrehwinkel von beispielsweise 40° bis 75° gegenüber der momentanen, vom Benutzer gehaltenen Arbeits-Winkelstellung überschreiten würde.

Eine Einrichtung zur Vermeidung von Unfällen aufgrund von Werkzeugblockieren in handgeführten Werkzeugen mit rotierendem Werkzeug, insbesondere Bohrhämmern, die mit einer Unterbrechereinrichtung zum Unterbrechen der Wirkung des Antriebsmotors auf das Werkzeug in Abhängigkeit von einem durch einen Verdrehsensor erfaßten Betriebszustand ausgerüstet sind, ist erfindungsgemäß dadurch gekennzeichnet, daß eine Recheneinrichtung vorgesehen ist, die aus dem vom Verdrehsensor gelieferten, einen vorgebbaren Referenzwert überschreitenden Sensorsignal über eine festgelegte Zeitspanne einen zu erwartenden Verdrehwinkel der Werkzeugmaschine errechnet und mit einem vorgegebenen maximalen Verdrehwinkel vergleicht, und daß über eine Schnittstelle bei Überschreiten des vorgegebenen maximalen Verdrehwinkels die Unterbrechereinrichtung aktivierbar ist.

Der Recheneinrichtung ist vorzugsweise eine bandbegrenzende Filteranordnung mit den oben angegebenen Grenzfrequenzen zugeordnet. Als Verdrehsensoren kommen prinzipiell verschiedene Sensorelemente oder Sensoranordnungen in Frage, nämlich etwa Drehbeschleunigungssensoren, insbesondere mikromechanische B-Messer, Drehzahlsensoren oder Drehmomentdetektoren. Zu bevorzugen sind nach dem derzeitigen Erkenntnisstand jedoch Drehbeschleunigungsmesser oder -sensoren mit einer Einschwingzeit, die typischerweise kleiner als eine Millisekunde ist.

Die Erfindung und vorteilhafte Einzelheiten werden nachfolgend unter Bezug auf die Zeichnung in einer beispielsweisen Ausführungsform näher erläutert. Es zeigen:

Fig. 1 ein Blockschaltbild zur Erläuterung grundsätzlicher Funktionen der der Erfindung zugrundeliegenden Idee der Vorausberechnung eines Handlungsbedarfs zur Vermeidung von Rotationsunfällen;

Fig. 2 die schematische Darstellung eines Bohrhammers als Beispiel für eine handgeführte Werkzeugmaschine, wobei die erfindungsgemäß erforderlichen Komponenten die der Fig. 1 entsprechenden Bezugshinweise tragen und schwarz abgesetzt wiedergegeben sind;

Fig. 3 ein Funktionsblockschaltbild zur vorausschauenden Signalauswertung bei Verwendung eines Beschleunigungsmessers als Sensor;

Fig. 4 den Verlauf der Übertragungsfunktion bei Verwendung von bandbegrenzten Integratoren innerhalb der Funktionsanordnung von Fig. 3;

Fig. 5 ein Source-Code-Flußdiagramm bei mikroprozessorimplementierter Look-Ahead-Signalauswertung und

Fig. 6 eine der Programmlösung analoge Schaltungsausführung zur Look-Ahead-Signalauswertung gemäß der Erfindung.

Mit Bezug auf die Figuren wird nachfolgend eine Einrichtung zur vorausschauenden Vermeidung von Unfällen durch plötzliches Blockieren des rotierenden Werkzeugs einer handgeführten Maschine, insbesondere eines Bohrhammers und ein dazu gehörender Algorithmus bzw. eine Auswerteschaltung beschrieben.

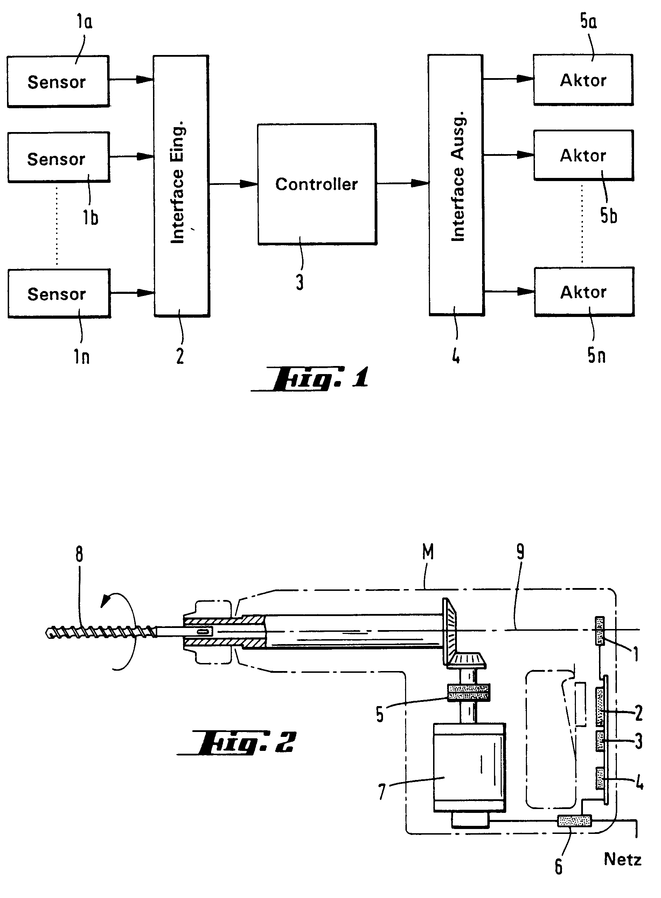

Wie die Fig. 1 erkennen läßt, wird der Betriebszustand einer handgeführten Werkzeugmaschine M mit mindestens einem Sensor überwacht, der einen Drehbeschleunigungssensor 1a, insbesondere ein mikromechanischer B-Messer, ein Drehwinkelsensor (Drehzahlsensor) 1b, ein Wegstreckensensor (translatorischer Sensor) usw. oder ein Drehmomentsensor 1n sein kann. Über eine Eingangsschnittstelle 2 zur Signalformung, A/D-Wandlung usw. gelangt (gelangen) das oder die Signal(e) des Sensors oder der Sensoren zu einer elektronischen Auswerteeinheit 3, die ein Mikroprozessor, ein in diskreter Schaltkreistechnik ausgeführter Mikrocontroller, ein Signalprozessor oder ähnliches sein kann, in welcher ein modell- oder regelbasierter Algorithmus abgearbeitet wird, welcher den Betriebszustand der Maschine bei Ansprechen des Sensors oder der Sensoren 1a bis 1n voraussagt. Ein erprobtes Beispiel eines modellbasierten Algorithmus wird weiter unten noch näher erläutert.

Wenn ein potentieller Unfall detektiert ist, werden über eine Ausgabeschnittstelle 4 ein oder mehrere Aktoren aktiviert, beispielsweise eine Kupplung 5a, die den Antriebsstrang zwischen einem Antriebsmotor 7 und dem Werkzeughalter bzw. Werkzeug 8 unterbricht, ein Stromabschalter 5b und/oder eine Bremse 5m. Diese Aktoren 5 vermeiden, daß ein vorausgesagtes oder vorausberechnetes Schadensereignis, insbesondere ein möglicher Rotationsunfall effektiv eintritt. Sobald die Maschine M in einen für den Bediener sicheren Zustand überführt worden ist, kann dem Bedienerwunsch entsprechend sofort weitergearbeitet werden.

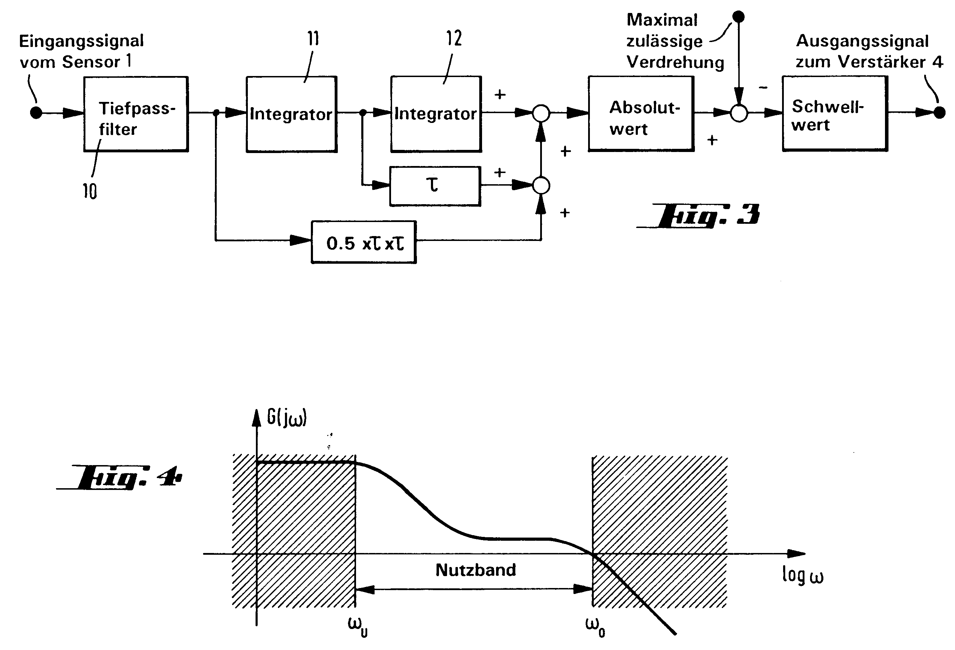

Bei dem in Fig. 2 veranschaulichten Ausführungsbeispiel wird eine Kombination eines Inertial-Rotationsbeschleunigungssensors 1 mit integrierter Verstärkung, einem programmierbaren Mikrocontroller 3 mit AD-Wandler und Digitalschnittstelle 3 bzw. DA-Schnittstelle 4, einem Halbleiter-Stromschalter 6 und einer elektromagnetisch betätigbaren Kupplung 5 dargestellt.

Die im Betrieb durch plötzliches Blockieren des Werkzeugs 8 ruckartig auftretende Reaktion um die Achse 9 soll erfindungsgemäß durch vorausschauende Berechnung auf einen ungefährlichen Betrag von typischerweise weniger als 60° beschränkt werden. Dazu wird die Rotationsbeschleunigung um die Achse 9 durch den Drehbeschleunigungssensor 1 erfaßt, wobei die Eigendynamik dieses Sensors 1 entsprechend der Problemstellung genügend schnell sein muß mit einer Einschwingzeit, die typischerweise kleiner sein sollte als 1 ms. Solche Drehbeschleunigungssensoren sind insbesondere in mikromechanischer Ausführung bekannt und auf dem Markt erhältlich, insbesondere auch in der Form als Differential-Kondensator, bei dem die Kondensator-Mittelelektrode durch die träge Pendelmasse des B-Messers gebildet ist, so daß der B-Messer unmittelbar in eine Meßschaltung eingebunden werden kann. Das verstärkte Signal des Sensors 1 wird über die AD-Schnittstelle 2 in den Mikrocontroller 3 eingelesen und durch einen weiter unten näher erläuterten Auswertealgorithmus weiter verarbeitet.

Der Auswertealgorithmus ist im Prinzip im Funktionsschaltbild der Fig. 3 veranschaulicht; er dient dazu, das Verhalten der Maschine M im Falle eines entsprechenden Sensorsignals vorauszusagen. Das als Tiefpaßfilter 10 ausgeführte Eingangsfilter dient dazu, hochfrequente Störungen zu reduzieren. Nach zweimaliger Integration, wobei die Integratoren 11 und 12 zu geeigneten Zeitpunkten initialisiert werden, wird aus dem Signal unter der für die Praxis zulässigen Annahme konstanter Beschleunigung der zu erwartende Verdrehwinkel zur aktuellen Zeit t plus einer vor-gegebenen oder vorgebbaren Zeitspanne $\tau$ berechnet. Diese sogenannte vorausschauende oder Look-Ahead-Zeitkonstante $\tau$ muß so gewählt werden, daß einerseits genügend Zeit für die auszuführende Sicherheitsmaßnahme bleibt, andererseits aber eine noch zuverlässige Prognose gegeben ist. Sobald der prognostizierte Verdrehwinkel betragsmäßig einen voreingestellten oder voreinstellbaren maximalen Verdrehwinkel überschreitet, wird über die DA-wandelnde Ausgangsschnittstelle 4 des Mikrocontrollers 3 ein entsprechender Aktorenverstärker aktiviert. Dieser Verstärker steuert einerseits den vorzugsweise als schneller Halbleiterschalter ausgeführten Stromunterbrecher 6 an, welcher die Stromzufuhr zum Antriebsmotor 7 der Maschine M sofort unterbricht und andererseits die elektromagnetische Kupplung 5. welche die Verbindung zwischen dem Rotor des Antriebsmotors 7 und dem Rest des Antriebsstrangs bis zum Werkzeug 8 auflöst. Dadurch wird zum einen erreicht, daß keine zusätzliche elektrische Energie in das Gerät eingespeist wird und zum anderen sichergestellt, daß die im Rotor des Motors 7 bereits gespeicherte kinetische Energie nicht mehr zu dem unerwünschten Verdrehen der Maschine M führt.

Im Falle der Verwendung von Rotationsbeschleunigungssensoren ist die mathematische Grundlage der erfindungsgemäßen Look-Ahead-Idee die zweifache Integration der im Intervall t (aktuelle Zeit) bis (t + $\tau$) als konstant angenommenen Beschleunigung u (t) mit den aktuellen Werten des Drehwinkels $\phi$ (t) und der Dreh-winkelgeschwindigkeit $\omega$ (t) und der Drehwinkelge-schwindigkeit $\omega$ (t) als Anfangsbedingungen. Es gilt:

$$\frac{d\omega(t)}{dt} = \frac{d^2\varphi(t)}{dt^2} = u(t)$$

Die Beschleunigung u(t) wird durch den Drehbeschleunigungssensor 1 gemessen und beispielsweise gegen einen konstanten Vorgabewert $u_0$ verglichen. Es gilt dann für das Intervall von t bis (t + $\tau$) die Annahme: $u(t) = u_0$. Daraus folgt:

$$=> \frac{d\hat{\varphi}(t+\tau)}{dt} = u_0\ \tau + \omega(t)$$

$$=> \hat{\varphi}(t+\tau) = \frac{1}{2}\ u_0\ \tau^2 + \omega(t)\ \tau + \varphi(t)$$

Die vorausberechnete Schätzung $\hat{\varphi}$ (t + $\tau$) für den wahren Drehwinkel $\varphi(t + \tau)$ wird um so genauer sein, je besser die getroffene Annahme bezüglich der Beschleunigung u(t) erfüllt ist. Hierzu ist es weiterhin erfindungsgemäß sinnvoll und für die Praxis in aller Regel notwendig, den Einfluß der immer vorhandenen tief- bzw. hochfrequenten Störungen zu reduzieren.

Bei der praktisch erprobten Ausführungsform der Erfindung sind im Blockschaltbild der Fig. 3 die Integratoren 11 und 12 als bandbegrenzte Integratoren ausgeführt, d.h. bei tiefen Frequenzen werden die Verstärkungen dieser Elemente auf einen endlichen Wert limitiert. Dies ist sinnvoll, damit die im Normalbe-trieb immer vorhandenen langsamen Handbewegun-gen des Bedieners, welche nicht zu einer Notabschaltung der Maschine M führen sollen, nicht die Integratoren 11 und 12 ansteuern. Außerdem eliminieren die bandbegrenzten Integratoren 11, 12 das Wegdriften der Schaltung auch dann, wenn der Beschleunigungssensor 1 nur ein quasi-statisches Verhalten aufweist, wie zum Beispiel für den Fall, daß ein piezoelektrischer Beschleunigungssensor als Sensor 1 verwendet wird.

Die mathematische Beschreibung der bandbegrenzten Integratoren erfolgt üblicherweise durch deren Übertragungsfunktion

$$G_I(s) = \frac{T_I}{T_I s + 1}$$

wobei der Paramater $T_I$ durch die Gleichung

$$T_I = \frac{1}{\omega_u}$$

gegeben ist und $\omega_u$ die Frequenz bezeichnet, ab der ein integrierendes Verhalten erzielt werden soll.

Typischerweise werden beim Arbeiten mit einem handgeführten Bohrgerät aber auch sehr große Beschleunlgungsspltzen mit vergleichsweise sehr hohen Frequenzen induziert. Damit diese Spitzen nicht zu einem fehlerhaften Auslösen der Sicherheitseinrichtung (Stromabschaltung, Lösen der Kupplung) führen, ist es zweckmäßig und für die Praxis in der Regel erforderlich, diese Signalanteile ab einer oberen Eckfrequenz $\omega_0$ herauszufiltern. Diese Bandbreitenbegrenzung des Eingangssignals vom Sensor 1 erfolgt mit dem als "Tiefpaßfilter" bezeichneten Block 10 in Fig. 3.

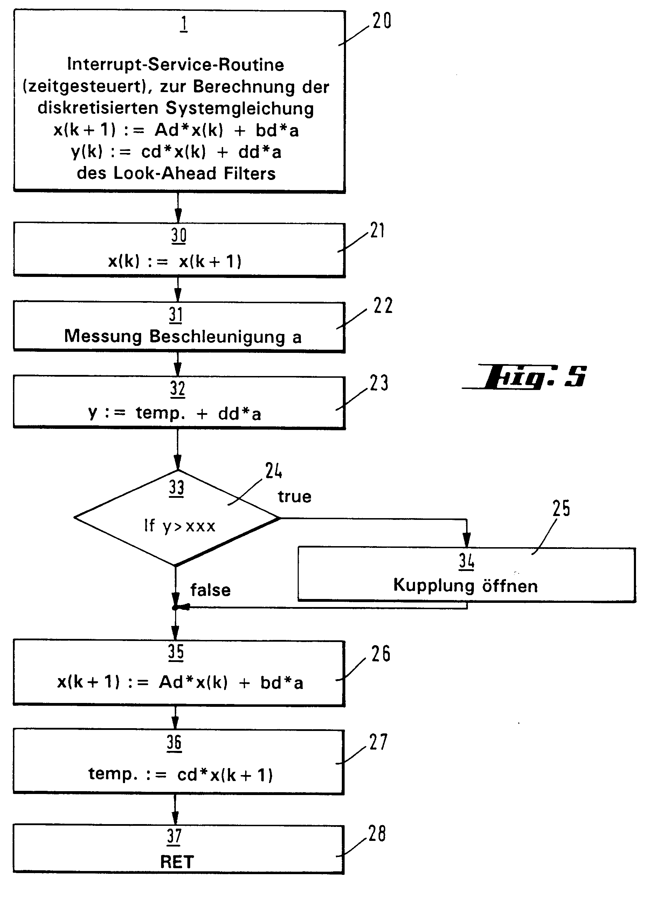

Die skalierte komplexe Übertragungsfunktion, aufgetragen über dem Logarithmus der Drehfrequenz $\omega$ mit Verdeutlichung des erfindungsgemäß zu verwendenden Nutzbands ist schematisch in Fig. 4 veranschaulicht. Die Grenzen $\omega_u$ und $\omega_0$ sind je nach Anwendung verschieden. Für das dargestellte Ausführungsbeispiel eines handgeführten Bohrgeräts gelten die folgenden Richtwerte:

$$0{,}5 \text{ Hz} < \omega_u < 10 \text{ Hz}$$

$$100 \text{ Hz} < \omega_0 < 1000 \text{ Hz}.$$

Entsprechende Richtwerte für andere Gerätetypen handgeführter Werkzeugmaschinen lassen sich für den Fachmann in ersichtlicher Weise experimentell einfach bestimmen.

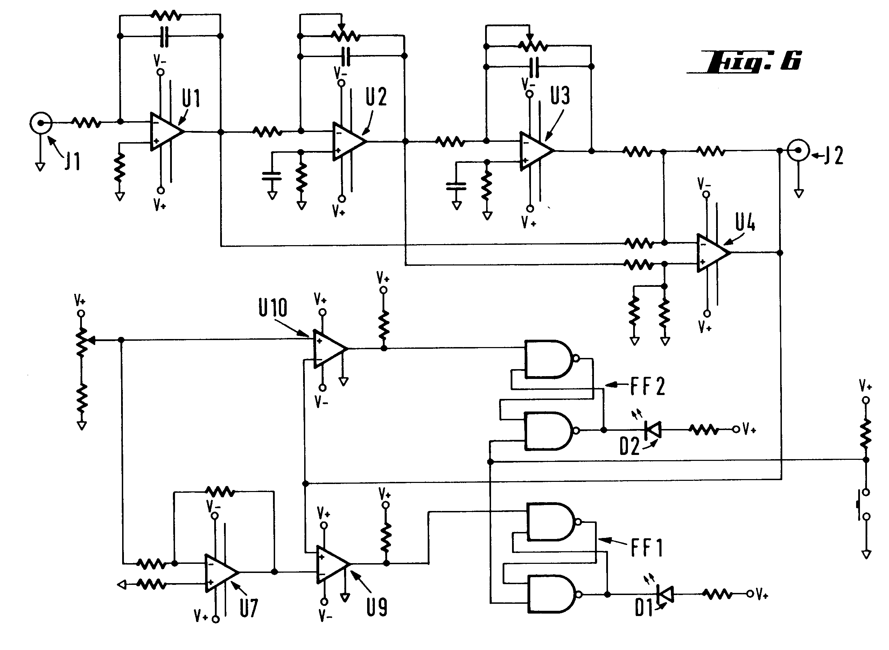

Die Realisierung der Signalauswerteschaltung gemäß den Funktionsblöcken der Fig. 3 kann entweder mit Hilfe eines Mikroprozessors mittels eines Softwareprogramms (vgl. Fig. 5) oder als analoge elektronische Schaltung (vgl. Fig. 6) erfolgen.

Die Fig. 5 zeigt das Flußdiagramm einer zeitgesteuerten Interrupt-Service-Routine zur Berechnung der im Block 20 (Feld 1) angegebenen diskreten Systemgleichung der Look-Ahead-Schaltung inclusive der notwendigen Filter, zum Beispiel des erwähnten Tiefpasses. Dieses Flußdiagramm wird periodisch mit einer festen Periodenzeit abgearbeitet. Die Diskretisierung muß für die gewählte Periodenzeit erfolgen.

Im Block 21 (Feld 30) werden die Zustandsgrößen umgespeichert.

Im Block 22 (Feld 31) wird zunächst der AD-Wandler der AD-Schnittstelle 2 für ein zur Beschleunigung proportionales Signal gestartet. Sobald die AD-Wandlung abgeschlossen ist, wird das Signal durch den Rechner (Controller 3) eingelesen.

Im Block 23 (Feld 32) wird der direkt vom Eingangssignal abhängige Teil einem im letzten Takt berechneten Wert zugeschlagen. Diese so berechnete Größe y wird im Block 24 (Entscheidungsraute 33) auf Überschreiten einer positiven und/oder negativen Schwelle überwacht, und gegebenenfalls wird der Aktuator, also insbesondere die Kupplung 5 geöffnet (Block 25; Feld 34).

In den Blöcken 26 und 27 (Felder 35 und 36) werden die Zustandsgrößen für den nächsten Takt gemäß den angegebenen Bedingungen sowie der schon jetzt berechenbare Anteil "temp" des Signals y berechnet.

Im Block 28, also am Schluß (Feld 37) erfolgt ein Rücksprung in das Hintergrundprogramm, in dem diverse weitere Funktionen durchgeführt werden, bis der nächste Interrupt einen weiteren Berechnungsschritt (Takt) auslöst.

Die im Prinzip gleichwirkende elektronische Schaltungsausführung der Fig. 6 für das Prinzip-Blockschaltbild der Fig. 3 wird nachfolgend in einer für den Fachmann ausreichenden Weise kurz beschrieben.

Ein zur Beschleunigung proportionales Spannungssignal beaufschlagt einen Eingang J1 und wird über ein Tiefpassfilter U1 auf den ersten bandbegrenzten Integrator U2 (Integrator 11 in Fig. 3) und von diesem weiter auf den zweiten bandbegrenzten Integrator U3 (Integrator 12 in Fig. 3) geführt. Die vorgegebenen Zeitkonstanten sind in der dargestellten Weise durch einstellbare RC-Glieder bestimmt. Die Ausgangssignale des Tiefpassfilters U1 und der Integratoren U2 und U3 werden durch einen Summierverstärker U4 in einer durch Vorschaltwiderstände bestimmten Gewichtung addiert. Das Ausgangssignal des Summierverstärkers U4 wird einerseits an einem Ausgang J2 ausgegeben und andererseits über zwei Komparatoren U9 bzw. U10 auf das Überschreiten eines positiven bzw. negativen Maximums überwacht, wobei das negative Maximum in der dargestellten Weise über einen Umkehrverstärker U7 vorgegeben sein kann. Die Ausgangssignale der Komparatoren U9 und U10 setzen zwei aus jeweils zwei NAND-Gliedern aufgebaute Flip-Flops FF1 bzw. FF2. Die Ausgangssignale der Flip-Flops FF1 bzw. FF2 werden durch LEDs D1 bzw. D2 angezeigt. Zusätzlich werden die beiden Ausgangssignale der Flip-Flops FF1, FF2 zum Schalten der Kupplung 5 benutzt.

Zusammenfassend bietet die Erfindung gegenüber allen bisher bekannten Lösungen für das Problem von potentiellen Rotationsunfällen bei handgeführten Werkzeugmaschinen den Vorteil, daß durch die vorzugsweise als Mikroprozessor implementierter Auswertealgorithmus verwirklichte Idee des "Look-Ahead" oder der vorausschauenden Entscheidung, das zukünftige Verhalten der Maschine vorhergesagt werden kann und somit reagiert werden kann, bevor die Maschine mit einem zu großen Drehimpuls versehen und damit ein Unfall nicht mehr zu vermeiden ist. Dank der sehr schnellen Auswertelogik kann der Wunsch eines Bedieners richtig interpretiert werden um nach einer potentiellen Unfalldetektion und anschließendem Sicherheitseingriff den gewünschten Betriebszustand sofort wieder zu erreichen. Ein besonderer Vorteil ergibt sich auch daraus, daß eine permanente oder periodische Selbstprüfung (Self-Test) über das Programm leicht erreicht werden kann sowie ein präzises Ansprechen und ein alterungsunabhängiges Auslöseverhalten.

Für eine konkrete Ausführung der Erfindung sind beispielhaft folgende Elemente nötig:

- Ein Beschleunigungsaufnehmer (piezoelektrisch, piezoresistiv, inertial basiert und/oder integriert als Teil einer mikroelektronischen Schaltung);
- Eine Auswerteeinheit entweder analog realisiert mit Hilfe von Operationsverstärkern, Dioden usw. (vgl. Fig. 6) oder digital mit Hilfe eines Mikroprozessors mit den entsprechenden Prozeßschnittstellen (vgl. Fig. 1 und 5);
- Eine oder mehrere Aktuatoren, um die Verbindung zwischen dem Antriebsmotor und dem Werkzeug zu unterbrechen (z. B. eine elektromagnetische Reibkupplung), vorzugsweise verbunden mit einer Stromunterbrechung.

**Patentansprüche**

1. Verfahren zur Vermeidung von Unfällen durch Werkzeugblockieren beim Arbeiten mit handgeführten Werkzeugmaschinen (M) mit rotierendem Werkzeug (8), insbesondere Bohrhämmern, die mit einer Unterbrechereinrichtung (5, 6) zum Unterbrechen der Wirkung des Antriebsmotors (7) auf das Werkzeug (8) in Abhängigkeit von einem durch einen Verdrehsensor (1) erfaßten Betriebszustand ausgerüstet sind, **dadurch gekennzeichnet,** daß unter Vorgabe einer Zeitkonstante ($\tau$) aus der vom Verdrehsensor (1) gelieferten Drehbewegungsgröße ein maximal zulässiger Verdrehwinkel der Werkzeugmaschine (M) vorausschauend berechnet und die Unterbrechereinrichtung (5, 6) aktiviert wird, sobald der berechnete, zu erwartende Verdrehwinkel den Wert des maximal zulässigen Verdrehwinkels überschreitet.

2. Verfahren nach Anspruch 1, **dadurch gekennzeichnet,** daß als Verdrehsensor (1) ein Drehbeschleunigungssensor verwendet wird, dessen Meßwerte ($u(t)$) bei Überschreiten eines vorgebbaren Referenzwerts ($u_0$) zur Umrechnung in den zu erwartenden Verdrehwinkel zweimalig über die Dauer der Zeitkonstante ($\tau$) integriert wird.

3. Verfahren nach Anspruch 2, **dadurch gekennzeichnet,** daß das Signal des Beschleunigungssensors vor oder bei dem Integrationsprozeß bandbegrenzt wird.

4. Verfahren nach Anspruch 3, **dadurch gekenn-**

**zeichnet,** daß die obere Grenzfrequenz $\omega_0$ des Nutzbandes in der Ordnung 10e1 bis 10e4 Hz gewählt wird.

5. Verfahren nach Anspruch 3 oder 4, **dadurch gekennzeichnet,** daß die untere Grenzfrequenz $\omega_u$ des Nutzbandes in der Ordnung (10e-1) bis 10e1 Hz gewählt wird.

6. Verfahren nach einem der vorstehenden Ansprüche, **dadurch gekennzeichnet,** daß als Unterbrechereinrichtung (5) eine im Antriebsstrang vom Antriebsmotor (7) zum Werkzeug (8) liegende Kupplung eingesetzt wird.

7. Verfahren nach einem der Ansprüche 1 bis 5, **dadurch gekennzeichnet,** daß als Unterbrechereinrichtung (5) eine elektromagnetische Bremse eingesetzt wird.

8. Verfahren nach einem der vorstehenden Ansprüche, **dadurch gekennzeichnet,** daß ein Stromunterbrecher (6) als Unterbrechereinrichtung eingesetzt wird, der die Motorstromversorgung unterbricht.

9. Einrichtung zur Vermeidung von Unfällen aufgrund von Werkzeugblockierern in handgeführten Werkzeugmaschinen (M) mit rotierendem Werkzeug, insbesondere Bohrhämmern, die mit einer Unterbrechereinrichtung (5, 6) zum Unterbrechen der Wirkung des Antriebsmotors (7) auf das Werkzeug (8) in Abhängigkeit von einem durch einen Verdrehsensor (1) erfaßten Betriebszustand ausgerüstet sind, **dadurch gekennzeichnet,** daß eine Recheneinrichtung (3) vorgesehen ist, die aus dem vom Verdrehsensor (1) gelieferten, einen vorgebbaren Referenzwert ($u_0$) überschreitenden Sensorsignal ($u(t)$) über eine festgelegte Zeitspanne ($\tau$) einen zu erwartenden Verdrehwinkel der Werkzeugmaschine errechnet und mit einem vorgegebenen, maximalen Verdrehwinkel vergleicht, und daß über eine Schnittstelle (4) bei Überschreiten des vorgegebenen, maximalen Verdrehwinkels die Unterbrechereinrichtung (5, 6) aktivierbar ist.

10. Einrichtung nach Anspruch 9, **dadurch gekennzeichnet,** daß der Verdrehsensor ein Drehbeschleunigungsmesser ist.

11. Einrichtung nach Anspruch 9 oder 10, **dadurch gekennzeichnet,** daß die Unterbrechereinrichtung eine im Antriebsstrang zwischen dem Antriebsmotor (7) und dem Werkzeug (8) angeordnete Kupplung ist.

12. Einrichtung nach Anspruch 10, **dadurch gekennzeichnet,** daß der Drehbeschleunigungsmesser ein piezoelektrischer, piezoresistiver oder mikromechanischer Beschleunigungsmesser ist.

13. Einrichtung nach Anspruch 10, **dadurch gekennzeichnet**, daß der Drehbeschleunigungsmesser als elektrisch-mikromechanischer Verbundchip ausgebildet ist, dessen Pendel die Mittelelektrode eines Differentialkondensators bildet.

14. Einrichtung nach einem der vorstehenden Ansprüche 10 bis 13, **dadurch gekennzeichnet**, daß die Recheneinrichtung (3) zwei in Kaskade verbundene bandbegrenzte Integratoren (11, 12) enthält.

15. Einrichtung nach Anspruch 14, **gekennzeichnet durch** ein dem ersten Integrator (11) vorgeschaltetes Tiefpaßfilter (10), wobei die Grenzfrequenzen des gesamten von der Recheneinheit (3) verarbeiteten Nutzfrequenzbands zwischen einer unteren Grenzfrequenz $\omega_u$ im Bereich von 0,5 Hz < $\omega_u$ < 10 Hz und einer oberen Grenzfrequenz $\omega_o$ im Bereich von 100 Hz < $\omega_o$ < 1000 Hz liegt.

## Claims

1. Method for the prevention of accidents caused by tool blocking during operation of handheld machine tools (M) with a rotating tool (8), in particular percussion drills, fitted with a shut-off mechanism (5, 6) for shutting off the effect of the drive motor (7) on the tool (8) in dependence of an operating state as detected by a rotary sensor (1), **characterised in that** a maximum admissible rotary angle of the machine tool (M) is calculated in advance by way of a specified time constant ($\tau$) from a rotary movement value delivered by the rotary sensor (1), and the shut-off mechanism (5, 6) is activated as soon as the calculated expected rotary angle exceeds the value of the maximum admissible rotary angle.

2. Method according to Claim 1, **characterised in that** the rotary sensor (1) is a rotary acceleration sensor the measuring values (u(t)) of which are, on exceeding a preset reference value ($u_o$), for conversion into the expected rotary angle twice integrated for the duration of the time constant ($\tau$).

3. Method according to Claim 2, **characterised in that** the signal of the acceleration sensor is prior to or during the integration process band restricted.

4. Method according to Claim 3, **characterised in that** the upper frequency limit $\omega_o$ of the utilised band is chosen in the order 10e1 to 10e4 Hz.

5. Method according to Claim 3 or 4, **characterised in that** the lower frequency limit $\omega_u$ of the utilised band is chosen in the order (10e-1) to 10e1 Hz.

6. Method according to one of the above claims, **char-**

**acterised in that** a clutch located in the drive link from the drive motor (7) to the tool (8) serves as a shut-off mechanism (5).

7. Method according to one of Claims 1 to 5, **characterised in that** an electro-magnetic brake serves as a shut-off mechanism (5).

8. Method according to one of the above claims, **characterised in that** a power shut-off (6) which shuts off the power supply to the motor serves as a shut-off mechanism.

9. Device for the prevention of accidents caused by tool blocking in handheld machine tools (M) with rotating tool, in particular percussion drills which are fitted with a shut-off mechanism (5, 6) for interrupting the effect of the drive motor (7) on the tool (8) in dependence of an operating state as detected by a rotary sensor (1), **characterised in that** a computer (3) is provided which calculates an expected rotary angle of the machine tool from the sensor signal (u(t)) as delivered by the rotary sensor (1) which exceeds a specified reference value ($u_o$) over a specified period of time ($\tau$) and compares it to a specified maximum rotary angle, and the shut-off mechanism (5, 6) is activated via an intersecting point (4) on exceeding the specified maximum rotary angle.

10. Device according to Claim 9, **characterised in that** the rotary sensor is a rotary acceleration meter.

11. Device according to Claim 9 or 10, **characterised in that** the shut-off mechanism is a clutch arranged in the drive link between drive motor (7) and tool (8).

12. Device according to Claim 10, **characterised in that** the rotary acceleration meter is a piezo-electric, piezo-resistive or micro-mechanical acceleration meter.

13. Device according to Claim 10, **characterised in that** the rotary acceleration meter is an electrical / micro-mechanical composite chip the pendulum of which forms the centre electrode of a differential capacitor.

14. Device according to one of the above Claims 10 to 13, **characterised in that** the computer (3) includes band restricted integrators (11, 12) which are connected in cascade.

15. Device according to Claim 14, **characterised by** a low-pass filter (10) upstream of the first integrator (11), and the restricted frequencies of the entire utilised band processed by the computer unit (3) lie between a lower limit frequency $\omega_u$ in the range of

0.5 Hz $< \omega_u <$ 10 Hz and an upper limit frequency $\omega_o$ in the range of 100 Hz $< \omega_o <$ 1,000 Hz.

**Revendications**

1. Procédé pour éviter des accidents causés par un blocage d'outils lors du travail avec des appareils portatifs (M) avec outil (8) tournant, en particulier des marteaux perforateurs, équipés d'un dispositif d'interruption (5, 6) pour l'interruption de l'action du moteur d'entraînement (7) sur l'outil (8) en fonction d'un état de fonctionnement détecté par un détecteur de torsion (1), **caractérisé en ce** que, avec prédétermination d'une constante de temps ($\tau$), un angle de torsion maximum admissible de l'appareil (M) est calculé en prévision à partir de la grandeur du mouvement de rotation fournie par le détecteur de torsion (1), et que le dispositif d'interruption (5, 6) est activé dès que l'angle de torsion prévisible calculé dépasse la valeur de l'angle de torsion maximum admissible.

2. Procédé selon la revendication 1, caractérisé en ce qu'il utilise comme détecteur de torsion (1) un détecteur d'accélération angulaire dont les valeurs de mesure (u(t)) sont intégrées deux fois sur la durée de la constante de temps ($\tau$), en cas de dépassement d'une valeur de référence ($u_0$) prédéterminable, pour la conversion en l'angle de torsion attendu.

3. Procédé selon la revendication 2, caractérisé en ce que la bande du signal du détecteur d'accélération est limitée avant ou pendant le processus d'intégration.

4. Procédé selon la revendication 3, caractérisé en ce que la fréquence limite supérieure $\omega_0$ de la bande utile est choisie dans l'ordre 10e1 à 10e4 Hz.

5. Procédé selon la revendication 3 ou 4, caractérisé en ce que la fréquence limite inférieure $\omega_u$ de la bande utile est choisie dans l'ordre (10e-1) à 10e1 Hz.

6. Procédé selon l'une des revendications précédentes, caractérisé en ce que le dispositif d'interruption (5) est un dispositif d'accouplement placé dans la branche d'entraînement conduisant du moteur d'entraînement (7) à l'outil (8).

7. Procédé selon l'une des revendications 1 à 5, caractérisé en ce que le dispositif d'interruption (5) est un frein électromagnétique.

8. Procédé selon l'une des revendications précédentes, caractérisé en ce qu'un interrupteur (6) est utilisé comme dispositif d'interruption qui coupe l'alimentation en courant électrique du moteur.

9. Dispositif pour éviter des accidents causés par le blocage de l'outil dans des appareils portatifs (M) avec outil tournant, en particulier des marteaux perforateurs, équipés d'un dispositif d'interruption (5, 6) pour l'interruption de l'action du moteur d'entraînement (7) sur l'outil (8) en fonction d'un état de fonctionnement détecté par un détecteur de torsion (1), **caractérisé en ce** qu'il est prévu un dispositif de calcul (3) qui calcule à partir du signal de détection (u(t)) délivré par le détecteur de torsion (1) et dépassant une valeur de référence ($u_0$) prédéterminée pendant une durée ($\tau$) fixe, un angle de torsion prévisible de l'appareil et le compare avec un angle de torsion maximum prédéterminé, et que le dispositif d'interruption (5, 6) peut être activé par l'intermédiaire d'une interface (4) dès que l'angle de torsion maximum prédéterminé est dépassé.

10. Dispositif selon la revendication 9, caractérisé en ce que le détecteur de torsion est un mesureur d'accélération angulaire.

11. Dispositif selon la revendication 9 ou 10, caractérisé en ce que le dispositif d'interruption est un dispositif d'accouplement placé dans la branche d'entraînement entre le moteur d'entraînement (7) et l'outil (8).

12. Dispositif selon la revendication 10, caractérisé en ce que le mesureur d'accélération angulaire est un mesureur d'accélération piézoélectrique, piézorésistif ou micromécanique.

13. Dispositif selon la revendication 10, caractérisé en ce que le mesureur d'accélération angulaire est réalisé sous la forme d'une puce mixte électrique-micromécanique dont le pendule constitue l'électrode médiane d'un condensateur différentiel.

14. Dispositif selon l'une des revendications précédentes 10 à 13, caractérisé en ce que le dispositif de calcul (3) comprend deux intégrateurs (11, 12) à bande limitée montés en cascade.

15. Dispositif selon la revendication 14, caractérisé en ce qu'il comprend un filtre passe-bas (10) monté en amont du premier intégrateur (11), les fréquences limites de l'ensemble de la bande de fréquences utiles devant être traité par l'unité de calcul (3) se situant entre une fréquence limite inférieure $\omega_u$ dans la plage de 0,5 Hz $< \omega_u <$ 10 Hz et une fréquence limite supérieure $\omega_o$ dans la plage de 100 Hz $< \omega_o <$ 1000 Hz.

Sensor 1a
Sensor 1b
Sensor 1n
Interface Eing. 2
Controller 3
Interface Ausg. 4
Aktor 5a
Aktor 5b
Aktor 5n

Fig. 1

Fig. 2

8
M
9
1
2
3
4
5
7
6
Netz

**Fig. 3**

Eingangssignal vom Sensor 1 — Tiefpass-filter (10) — Integrator (11) — Integrator (12) — $0.5 \times T \times T$ — $T$ — Absolut-wert — Maximal zulässige Verdrehung — Schwell-wert — Ausgangssignal zum Verstärker 4

**Fig. 4**

$G(j\omega)$, Nutzband, $\omega_u$, $\omega_0$, $\log \omega$

```
┌─────────────────────────────────────┐
│                 1                    │── 20
│                                      │
│       Interrupt-Service-Routine      │
│  (zeitgesteuert), zur Berechnung der │
│    diskretisierten Systemgleichung   │
│      x(k + 1) := Ad*x(k) + bd*a      │
│        y(k) := cd*x(k) + dd*a        │
│        des Look-Ahead Filters        │
└─────────────────────────────────────┘
                   │
                   ▼
┌─────────────────────────────────────┐
│                30                    │── 21
│          x(k) :=  x(k + 1)           │
└─────────────────────────────────────┘
                   │
                   ▼
┌─────────────────────────────────────┐
│                31                    │── 22
│       Messung Beschleunigung a       │
└─────────────────────────────────────┘
                   │
                   ▼
┌─────────────────────────────────────┐
│                32                    │── 23
│          y := temp. + dd*a           │
└─────────────────────────────────────┘
                   │
                   ▼
              ╱────────╲        24
            ╱     33     ╲       true
          ╱               ╲───────────────┐
          ╲   If y > xxx   ╱               │          25
            ╲            ╱          ┌───────▼──────────────────┐
              ╲────────╱           │         34               │
                   │   false       │    Kupplung öffnen       │
                   ▼               └──────────────────────────┘
                   │◄──────────────────────┘
                   ▼
┌─────────────────────────────────────┐
│                35                    │── 26
│     x(k + 1) := Ad*x(k) + bd*a       │
└─────────────────────────────────────┘
                   │
                   ▼
┌─────────────────────────────────────┐
│                36                    │── 27
│         temp. := cd*x(k + 1)         │
└─────────────────────────────────────┘
                   │
                   ▼
┌─────────────────────────────────────┐
│                37                    │── 28
│                RET                   │
└─────────────────────────────────────┘
```

Fig. 5

11

Fig. 6